Europäisches Patentamt

European Patent Office

Office européen des brevets

(19)

(11) EP 0 428 199 B1

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(51) Int Cl.$^6$: **H04L 25/03**, H04L 1/20

(21) Anmeldenummer: **90202814.1**

(22) Anmeldetag: **22.10.1990**

(54) **Kanalschätzer enthaltender Empfänger für digitales Übertragungssystem**

Receiver for digital communication system with channel estimator

Récepteur pour système de communication numérique comprenant un estimateur de canal

(84) Benannte Vertragsstaaten:
**DE FR GB IT SE**

(30) Priorität: **25.10.1989 DE 3935436**
**20.01.1990 DE 4001592**

(43) Veröffentlichungstag der Anmeldung:
**22.05.1991 Patentblatt 1991/21**

(73) Patentinhaber:
• **Philips Patentverwaltung GmbH**
**D-22335 Hamburg (DE)**
Benannte Vertragsstaaten:
**DE**
• **Philips Electronics N.V.**
**NL-5621 BA Eindhoven (NL)**
Benannte Vertragsstaaten:
**FR GB IT SE**

(72) Erfinder: **Koch, Wolfgang, Dr. Ing.**
**W-8501 Heroldsberg (DE)**

(74) Vertreter: **Peuckert, Hermann, Dipl.-Ing. et al**
**Philips Patentverwaltung GmbH,**
**Röntgenstrasse 24**
**D-22335 Hamburg (DE)**

(56) Entgegenhaltungen:
**WO-A-86/05639     US-A- 3 898 564**

• **38TH IEEE VEHICULAR TECHNOLOGY CONFERENCE, 15-17 JUNE 1988, PHILADELPHIA, US Seiten 377 - 384 BAIER A. ET AL. 'BIT SYNCHRONIZATION AND TIMING SENSITIVITY IN ADAPTIVE VITERBI EQUALIZERS FOR NARROWBAND-TDMA DIGITAL MOBILE RADIO SYSTEMS'**

EP 0 428 199 B1

**Beschreibung**

Die Erfindung betrifft einen Empfänger mit einem Kanalschätzer zum Schätzen einer Kanalimpulsantwort für den Übertragungskanal aus einer im Empfänger gespeicherten Trainingsdatenfolge und einer in übertragenen Daten enthaltenen Trainingsdatenfolge.

Solche Empfänger werden beispielsweise im künftigen paneuropäischen Mobilfunksystem eingesetzt. Bei diesem Mobilfunksystem werden Sprachsignale in digitalisierter Form zusammen mit anderen digitalen Signalen in einem Vielfachzugriffs-Zeitschlitz-Verfahren übertragen. Von einem Sender des Mobilfunksystems werden diese Daten mittels einer geeigneten Modulation ausgesandt. Durch Reflexionen und Mehrwegeausbreitung auf dem Übertragungsweg erreicht das ausgesendete Signal den Empfänger in mehreren überlagerten Signalanteilen mit unterschiedlichen Laufzeiten und Phasenverschiebungen. Das vom Sender gesendete Signal wird hierdurch verzerrt. Diese Verzerrungen bewirken, daß die im empfangenen Signal enthaltenen Datensymbole durch vorangegangene Datensymbole beeinflußt werden (Nachbarzeichenstörungen).

Zur Detektion der ursprünglich gesendeten Datensymbole ist es erforderlich, diese Verzerrungen durch Entzerrung rückgängig zu machen. Hierzu kann beispielsweise ein adaptiver Entzerrer eingesetzt werden, dem als notwendige Information zur Entzerrung eine den Übertragungsweg kennzeichnende Kanalcharakteristik vorgegeben werden muß. Durch Ortsveränderung des Mobilfunkempfängers ändert sich aber fortlaufend der Übertragungsweg zwischen Sender und Empfänger und hierdurch auch die den jeweiligen Übertragungsweg beschreibende Kanalinformation. Es ist daher vorgesehen, diese Kanalcharakteristik durch eine für jeden Zeitschlitz eigens durchzuführende Kanalvermessung jeweils neu zu ermitteln. Hierzu wird eine Trainingsdatenfolge mit konstantem Dateninhalt verwendet, wobei der Dateninhalt der Trainingsdatenfolge in jedem Empfänger gespeichert ist. Jede ausgesendete Datenfolge enthält in ihrer Mitte diese Trainingsdatenfolge. Ein in jedem Empfänger angeordneter Kanalschätzer schätzt durch Verarbeitung der verzerrt empfangenen Trainingsdatenfolge mit der in unverzerrter Form gespeicherten Trainingsdatenfolge eine Kanalimpulsantwort, die dem Entzerrer zugeführt wird.

Eine zentrale Bedeutung bei der Auswertung des empfangenen Signals kommt der Messung der Empfangsgüte zu. Zur Bewertung der Empfangsgüte gibt es vor allem aus analogen Schaltungskonzepten bekannte Möglichkeiten. So kann beispielsweise die Signalstärke (Feldstärkemessung), oder auch ein Signal-/Rauschverhältnis gewählt werden. Aus DE-OS 34 27 473 ist beispielsweise ein Diversity-Empfänger für einen Rundfunkempfänger zum Empfangen räumlich unterschiedlich gesendeter analoger Rundfunksignale bekannt, bei dem das Signal-/Rauschverhältnis dadurch gemessen wird, daß das demodulierte Audiosignal einem Hochpaßfilter zugeführt ist. Das Amplitudenverhältnis von hochpaßgefiltertem Analogsignal (Rauschkomponente) und dem ungefilterten Analogsignal ergibt eine dem Signal-/Rauschverhältnis näherungsweise entsprechende Spannung.

Solche analogen Meßmethoden sind zur Bewertung eines digitalen Empfängers, z.B. wegen der großen Frequenzbandbreite eines digitalen Signals, nur bedingt geeignet. Zur Bewertung der Empfangsgüte digital zu verarbeitender Eingangssignale würde die Messung der Bitfehlerwahrscheinlichkeit der detektierten Datensymbole in besonderem Maße der gewählten Signalverarbeitung entsprechen. Dies ist jedoch sehr aufwendig.

Aufgabe der vorliegenden Erfindung ist es, bei einem Empfänger der eingangs genannten Art auf möglichst einfache Art und Weise eine aussagekräftige Bewertung der Empfangsgüte durchzuführen.

Diese Aufgabe wird bei einem Empfänger der eingangs genannten Art dadurch gelöst, daß der Empfänger Mittel zur Ermittlung einer Schätzfolge für die empfangene Trainingsdatenfolge aus der im Empfänger gespeicherten Trainingsdatenfolge mittels der geschätzten Kanalimpulsantwort und Mittel zur Ermittlung des Grads der Übereinstimmung der geschätzten Trainingsdatenfolge mit der empfangenen Trainingsdatenfolge aufweist.

Ein aus dem Grad der Übereinstimmung der geschätzten und der empfangenden Trainingsdatenfolgen berechnetes Bewertungskriterium hat den Vorteil, daß nicht nur die Empfangsgüte als solche, sondern auch die Entzerrbarkeit des Empfangssignals bewertet wird. Da dieses Bewertungskriterium sowohl von den augenblicklichen Kanaleigenschaften des Übertragungskanals als auch von dem verwendeten Kanalschätzer abhängig ist, drückt dieses Bewertungskriterium daher aus, wie gut die gerade vorgefundene Kanaleigenschaft des Übertragungskanals mit dem gegebenen Kanalschätzer nachgebildet werden kann. Je besser die Nachbildung ausfällt, umso besser wird in den meisten Fällen die detektierte Datenfolge der ursprünglich gesendeten Datenfolge entsprechen, wobei eine exakte Nachbildung des Übertragungskanals schon allein wegen im Übertragungskanal meist statistisch verteilt auftretenden Rauschsignalen nicht möglich ist.

Zur Überprüfung des Grades der Übereinstimmung der geschätzten Trainingsdatenfolge mit der empfangenen Trainingsdatenfolge ist es vorteilhaft, die gespeicherte Trainingsdatenfolge, gegebenenfalls nach Remodulation, mit der geschätzten Kanalimpulsantwort zu falten. Um den Grad der Übereinstimmung der geschätzten Trainingsdatenfolge mit der empfangenen Trainingsdatenfolge wertemäßig auszudrücken wird eine Bewertungszahl Q gebildet, die die Empfangsgüte beschreibt. Eine einfache Möglichkeit, diese Bewertungszahl Q zu bilden, ist die Berechnung der Summe der quadratischen Distanzen zwischen sich jeweils entsprechenden Gliedern der geschägten Trainingsdatenfolge und der empfangenen Trainingsdatenfolge.

Besonders vorteilhaft ist es, zur Bildung der quadratischen Distanzen nur eine aus der Mitte der Trainingsdatenfolge herausgegriffene Anzahl von Gliedern heranzuziehen. Hierdurch wird erreicht, daß nur solche Glieder des Faltungsergebnisses zum Vergleich herangezogen werden, die ausschließlich von der Trainingsdatenfolge beeinflußt sind.

Im besonderen Maße eignet sich ein auf diese Weise gebildetes Bewertungskriterium für einen Diversity-Empfänger, der mindestens zwei Empfangskreise und einen Entscheider zum Auswählen jeweils eines dieser Empfangskreise aufweist, wobei für jeden Empfangskreis ein solches Bewertungskriterium gebildet wird. Da zur Gewinnuno. des Bewertungskriteriums auch auf die im Empfänger gespeicherte Trainingsdatenfolge zurückgegriffen werden kann, ist eine vollständige Entzerrung der empfangenen Signale nicht notwendig. In besonders vorteilhafter Weise kann daher zunächst ohne Entzerrung der Empfangssignale das nach dem Bewertungskriterium günstigere Signal ausgewählt werden, um dann anschließend nur dieses eine Signal zu entzerren.

Die Erfindung wird nun im folgenden anhand von in der Zeichnung dargestellten Ausführungsbeispielen näher beschrieben und erläutert.

Es zeigen in schematischer Darstellung:

Fig. 1    ein Funkübertragungssystem mit einer Anordnung zur Bewertung eines empfangenen Signals.

Fig. 2    ein Transversalfilter zum Falten einer Impulsantwort eines Übertragungskanals mit einer gespeicherten Trainingsdatenfolge.

Fig. 3    einen Diversity-Empfänger.

Fig. 4    einen Signalrahmen eines Zeitschlitz-Vielfachzugriffs-Kanals und einen Zeitschlitz mit Nutzdatenteilfolgen und Trainingsdatenfolge.

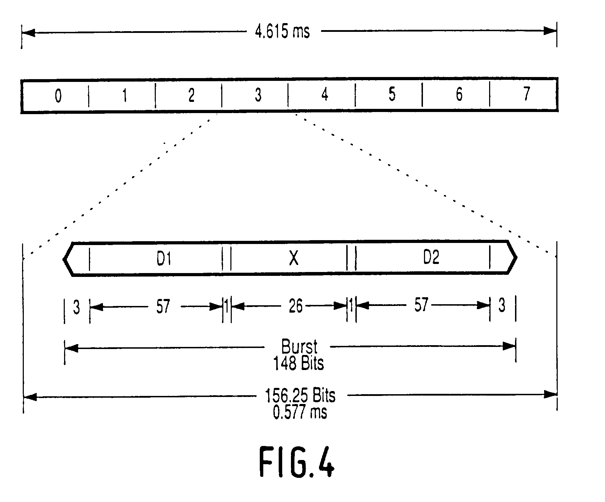

Als Ausführungsbeispiel wurde ein für ein künftiges vorgesehenes pan-europäisches Mobilfunksystem geeignetes Funkübertragungssystem vorgesehen. Bei diesem System sind 124 Frequenzkanäle im Frequenzbereich 890 bis 915 MHz für die Übertragung zwischen einer Mobilstation und einer Feststation bzw. als Gegenkanal im Frequenzbereich 935 bis 960 MHz für die Übertragung zwischen Feststation und Mobilstation vorgesehen. Jeder Frequenzkanal weist eine Zeitschlitz-Vielfach-Zugriffs-Struktur, die in der oberen Hälfte der Fig. 4 als Signalrahmen dargestellt ist, mit acht Zeitschlitzen 0...7 auf. Ein Zeitschlitz kann einen sogenannten "normal burst", einen "frequency correction burst", einen "synchronisation burst" oder einen "access burst" enthalten. In der unteren Hälfte der Fig. 4 ist als Zeitschlitz 3 ein "normal burst" dargestellt, wie er zur Übertragung von Nutzdatensymbolen verwendet wird. Eine solche Nutzdatenfolge kann beispielsweise ein Teil eines digitalisierten Sprechsignals sein. Die Nutzdatensymbole werden in zwei Nutzdatenteilfolgen D1 bzw. D2 in den Zeitschlitz eingebettet. In der Mitte des Zeitschlitzes ist von den Nutzdatenteilfolgen D1, D2 eine Trainingsdatenfolge X eingeschlossen. Am Beginn der ersten Nutzdatenteilfolge und am Ende der zweiten Nutzdatenteilfolge befinden sich noch jeweils drei Bits, die ebenfalls zur Entzerrung der Nutzdatenteilfolgen herangezogen werden können. Ein links und rechts zwischen der Trainingsdatenfolge und den Nutzdatenteilfolgen jeweils eingeschobenes Bit ist in diesem Zusammenhang ohne Bedeutung. Der gesamte Burst ist jedoch kürzer ausgelegt als der für den Burst bereitgestellte Zeitschlitz des Signalrahmens, um Burstzuweisungsfehler und Laufzeitunterschiede im Übertragungskanal ausgleichen zu können, so daß auf diese Weise eine Überlappung benachbarter Bursts, die von verschiedenen Mobilstationen gesendet werden, vermieden wird.

Der Dateninhalt des Zeitschlitzes wird in einem Sender 1 mittels einer Gaussian Minimum Shift Keying (GMSK) Technik moduliert. Hierdurch, und durch das Durchlaufen eines dispersiven Übertragungskanals, kommen am Empfänger Datensignale an, in denen die ursprünglichen Datensymbole b nicht aufzulösen sind. Allenfalls lassen sich zeitlich abgrenzbare Bereiche angeben, in welchen den ursprünglich gesendeten Datensymbolen Datensignale bzw. den ursprünglich gesendeten Datensymbolen der Trainingsdaten Trainingssignale zuordenbar sind. Zur Detektierung der ursprüglich gesendeten Datensymbole müssen die Verzerrungen des dispersiven Übertragungskanals und die durch die gewählte Modulation bewußt eingebrachten "Signalverzerrungen" in einem geeigneten Empfänger 2 rückgängig gemacht werden.

Ein mit einem Empfänger 2 empfangenes trägerfrequentes Empfangssignal wird zunächst nach Durchlaufen einer Eingangsstufe 20, in welcher das Empfangssignal verstärkt und selektiert wird, mit Hilfe eines nicht dargestellten Quadraturmischers ins Basisband umgesetzt. Die durch den Quadraturmischer erzeugten Quadratursignale werden mittels einer Sample- and Hold-Schaltung 21 abgetastet und durch einen A/D-Umsetzer 22 in digitale Werte $Z = z_0,...z_j$ umgesetzt. Die in den Abtastwerten Z enthaltene Folge der Abtastwerte der Trainingsdatenfolge X wird im folgenden mit X' bezeichnet. Die Umsetzung der empfangenen Signale in die digitalisierten Abtastwerte ermöglicht eine digitale Signalverarbeitung. Durch eine nicht dargestellte Synchronisationseinrichtung werden die digitalisierten Abtastwerte jeweils für die Dauer des vom betrachteten Empfänger zu verarbeitenden Zeitschlitzes in einem ersten Schreib-Lese-Speicher (RAM) 23 abgespeichert. Die Zeitdauer bis zum Eintreffen des nächsten zu verarbeitenden Zeitschlitzes kann nun für die weitere Verarbeitung der im RAM zur Verfügung stehenden Abtastwerte genutzt werden.

Die digitale Signalverarbeitung gliedert sich in die Entzerrung und Demodulation und die hierzu erforderliche zeitschlitzweise korrelative Kanalschätzung. Zur Entzerrung und Demodulation wird im Ausführungsbeispiel ein Viterbi-Entzerrer 25 verwendet, welcher unter Ausnützung der Kenntnis der momentanen Kanalcharakteristik die vom Sender ausgesandten digitalen Nutzinformationen im Empfänger aus den im RAM 23 gespeicherten Abtastwerten zurückgewinnt.

Ein Kanalschätzer 24 wertet das in jedem Zeitschlitz enthaltene Trainingssignal aus. Die ursprünglich ausgesendeten Datensymbolfolgen der Trainingsdaten sind hierfür in jedem Empfänger in einem Festwertspeicher (ROM) 26 abgelegt. Die Trainingsdatenfolge ist so gewählt, daß sie eine impulsförmige Autokorrelationsfunktion aufweist. So kann der Kanalschätzer 24 die Position der Trainingsdatenfolge im Empfangssignal anhand allgemein bekannter Algorithmen leicht auffinden. Der Aufbau eines solchen Kanalschätzers für einen Viterbi-Entzerrer ist beispielsweise in dem Aufsatz "Bit synchronization and timing sensitivity in adaptive Viterbi equalizers for narrowband TDMA digital mobile radio systems", A. Baier, G. Heinrich, U. Wellens, IEEE Vehicular Techn. Conf., Philadelphia, 15-17 June 1988, pp. 377-384, beschrieben.

Durch den dispersiven Übertragungskanal überlagern sich am Empfänger Signale $r(t-t_1)$, $r(t-t_2)$,..., die gegenüber einem vom Sender ausgesendeten Signal $r(t)$ unterschiedliche Verzögerungszeiten $t_1$, $t_2$..., aufweisen. Dies führt zu linearen Verzerrungen. Nach einer gewissen Zeit, die von der Charakteristik des Übertragungskanals abhängig ist, ist der Einfluß der am Empfänger verzögert eintreffenden Signalanteile nicht mehr von Bedeutung und braucht bei der Entzerrung nicht mehr berücksichtigt zu werden. Vorteilhafterweise kann die zu berücksichtigende Laufzeitverzögerung als Anzahl n der in dieser Zeitspanne ausgesendeten Datenelemente angegeben werden. Durch Kreuzkorrelation der im Eingangssignal enthaltenen verzerrten Trainingsdatenfolge $X'$ mit der im ROM 26 gespeicherten unverzerrten Trainingsdatenfolge $X$ ermittelt der Kanalschätzer 24 eine Kanalimpulsantwort $H(0)$, die aus mehreren Parametern $h_0(0)...h_k(0)$ zusammengesetzt ist. Die Anzahl k+1 der Parameter entspricht hierbei, wenn von einem Abtastwert pro gesendetem Datensymbol ausgegangen wird, der Anzahl n der bei der Entzerrung zu berücksichtigenden Datensymbole. Diese geschätzte Kanalimpulsantwort $H(0)$ wird dem Viterbi-Entzerrer 26 als Vektor von Eingangsparametern zugeführt.

Zur Gewinnung eines Bewertungskriteriums der Empfangsgüte des empfangenen Signals ist die Kanalimpulsantwort $H(0)$ einer Anordnung zur Faltung von Datenfolgen 27 zugeführt. Einem weiteren Eingang der Anordnung zur Faltung von Datenfolgen 27 ist die im ROM 26 gespeicherte Trainingsdatenfolge $X = x_1,...x_m$ zugeführt. Die Anordnung zur Faltung von Datenfolgen 27 faltet die Trainingsdatenfolge $X$ mit der Kanalimpulsantwort $H(0)$ zu einer Folge $Y = y_1,...y_{k+m-2}$ mit

$$(1) \qquad y_i = \sum_{n=0}^{k+m-2} x_n \, h_{i-n}.$$

Durch Faltung der Trainingsdatenfolge $X$ mit der Kanalimpulsantwort $H(0)$ wird auf diese Weise eine Schätzung $Y$ für den ungestört empfangenen Signalausschnitt, der die Trainingsdatenfolge enthält, durchgeführt. Das heißt, es werden nur die Signalverzerrungen nachgebildet, die durch das Durchlaufen des dispersiven Übertragungskanals, verursacht werden. Weitere Störungen wie z.B. Rauschen, bleiben bei dieser Schätzung unberücksichtigt.

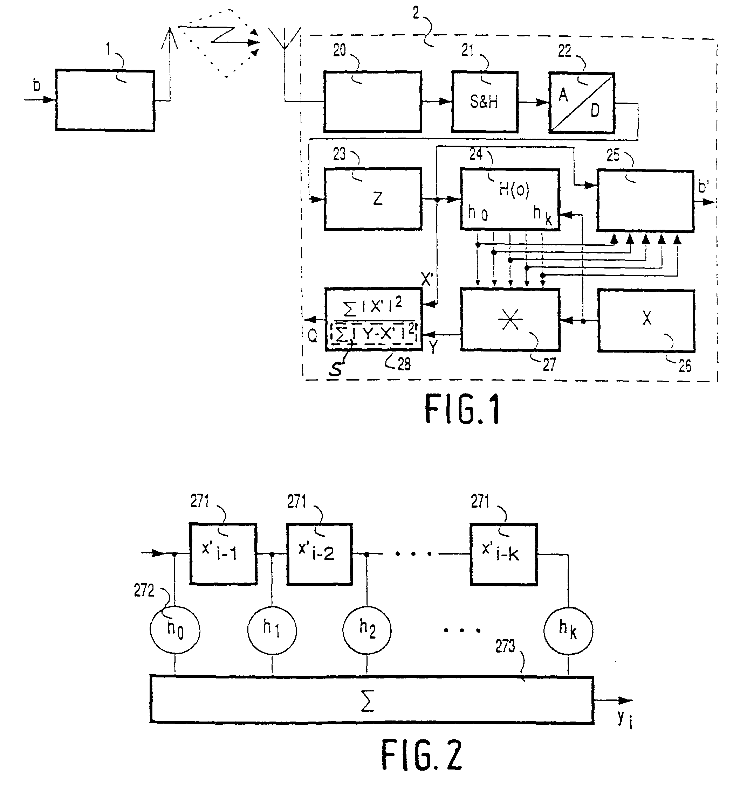

Fig. 2 zeigt ein Transversalfilter, das sich zur Erzeugung des Faltungsergebnisses eignet. Bei diesem Transversalfilter werden die einzelnen Glieder der Trainingsdatenfolge taktweise seriell eingelesen. Das Transversalfilter besteht aus in Reihe geschalteten einzelnen Registerzellen 271, wobei der Eingang einer Registerzelle immer mit einer vorherliegenden Registerzelle bzw. dem Eingang verbunden ist und auf diese Weise ein Schieberegister gebildet wird. Der Eingang des Transversalfilters bzw. der Ausgang der Registerzellen 271 wird jeweils mit zweiten Registerzellen 272, in welchen die Koeffizienten $h_0,..h_k$ der Kanalimpulsantwort $H(O)$ abgelegt sind, multipliziert. Die Ausgänge aller Multiplizierzellen sind über einen Summenbildner 273 zusammengefaßt und ergeben jeweils ein Teilglied $y_i$ der zu schätzenden Trainingsfolge $Y$. In einem Summenbildner 28 wird die Differenz zwischen der tatsächlich empfangenen Trainingsfolge $X'$ und dem auf vorstehend beschriebene Weise erzeugten Schätzwert der Trainingsfolge $Y$ ermittelt. Hierzu wird jedes einzelne Glied $y_i$ dem jeweiligen aus dem empfangenen Signal zugeordneten Abtastwert $x'_i$ zugeordnet und die jeweiligen einander zugeordneten Glieder $y_i$, $x'_i$ voneinander subtrahiert. Nach der Subtraktion wird die jeweils erhaltene Differenz der beiden einander zugeordneten Glieder $y_i$, $x'_i$ mit sich selbst multipliziert. Durch Aufsummation der auf diese Weise gebildeten quadrierten Differenzen sich entsprechender Glieder erhält man eine Bewertungszahl S, die die Empfangsgüte des empfangenen Signals angibt

$$(2) \qquad S = \Sigma \, s_i = \Sigma \, |y_i - x'_i|^2.$$

Je kleiner die Bewertungszahl S ist, umso besser entspricht die geschätzte Trainingsdatenfolge dem entsprechenden Teil des empfangenen Signals, das die Trainingsdatenfolge enthält. Geht man davon aus, daß die Kanalimpulsantwort innerhalb eines Zeitschlitzes konstant ist, so ist es zulässig, die Bewertungszahl S auch als Bewertung der übrigen Abtastwerte des empfangenen Signals eines Zeitschlitzes zu verwenden. Je geringer die Bewertungszahl S ist, umso größer ist die Wahrscheinlichkeit, daß durch anschließende Entzerrung des Signals die ursprünglich gesendeten Datenbits detektiert werden können. Diese Bewertungszahl S berücksichtigt beispielsweise, daß sehr stark verzerrte Signale sich durch eine gute Schätzung der Kanalimpulsantwort unter Umständen besser entzerren lassen, als ein relativ gering verzerrtes Signal, für das nur eine bedingt geeignete Kanalimpulsantwort geschätzt werden kann. Implizit berücksichtigt diese Bewertungszahl auch auf dem Übertragungsweg eingebrachtes Rauschen. Rauschen kann durch den Kanalschätzer nicht berücksichtigt werden und führt demzufolge zu schlechteren Schätzergebnissen, die auf diese Weise zu einer höheren Bewertungszahl führen.

Die Bewertungszahl S ist eine absolute Größe. Unter Umständen eignet sich eine relative Zahlenangabe, bei der die Stärke des Empfangssignals ins Verhältnis zur Bewertungszahl S oder einer davon abgeleiteten Größe gesetzt wird, noch besser zur Beurteilung der Empfangsgüte. In einer verbesserten Ausführungsform wird eine Gütezahl Q ermittelt, bei der der Energieinhalt der empfangenen Trainingsdatenfolge X′ auf die Bewertungszahl S bezogen wird.

$$(3) \qquad Q = \frac{\Sigma \, |X_i'|^2}{S} = \frac{\Sigma \, |x_i'|^2}{\Sigma \, |y_i - x_i'|^2}$$

Zur Ermittlung des Energieinhalts der empfangenen Trainingsdatenfolge X′ werden die Betragsquadrate der einzelnen Glieder $x_i'$ dieser Folge summiert. Je größer die Gütezahl Q ist, umso störungsfreier wurde die Trainingsdatenfolge empfangen. Auf diese Weise wird die Gütezahl Q von der Empfangsfeldstärke unabhängig. Sie ist ein Maß für das mittlere Signal-zu-Rauschverhältnis in dem betrachteten Zeitschlitz.

Ergänzungshalber sei erwähnt, daß zur Gütezahl Q äquivalente Bewertungskriterien erhalten werden können, wenn die Summe der Betragsquadrate $|y|^2$ der geschätzten Trainingsdatenfolge Y ins Verhältnis zu S gesetzt wird.

Dies hat den Vorteil, daß die Berechnung der Summe der Betragsquadrate von Y gemäß der Beziehung

$$(4) \qquad |Y|^2 = C \cdot \sum_{i=0}^{k} |h_i|^2$$

vereinfacht werden kann, wobei die Konstante C ein von der Trainingssequenz X abhängiger Wert ist. Die Berechnung der Betragsquadrate nach Gleichung (4) erfordert weit weniger Berechnungsschritte als eine explizite Berechnung der $y_i$ nach Gleichung (1) und anschließenden Betragsquadratbildung.

Bei der empfangenen Trainingsdatenfolge sind die ersten k und letzten k Glieder der Abtastwerte der Trainingsdatenfolge von Datensymbolen der der Trainingsdatenfolge vorangegangenen Nutzdatenteilfolgen beeinflußt. In einer verbesserten Ausführungsform werden daher bei der Faltung zur Erzeugung des Schätzwertes Y nur die Glieder $y_k, \ldots y_{m-2}$ erzeugt und mit den entsprechenden Abtastwerten verglichen. Auf diese Weise ist die Bewertungszahl S bzw. die Gütezahl Q ausschließlich von den Gliedern der Trainingsdatenfolge abhängig. Bei einer entsprechend langen Trainingsdatenfolge kann es unter Umständen auch aus Gründen der Rechenzeit sinnvoll sein, auch noch weniger Glieder zum Vergleich heranzuziehen und trotzdem eine hinreichend geeignete Bewertungszahl S bzw. Gütezahl Q zu erhalten.

Bei linearen Modulationsverfahren, wie z.B. der im Ausführungsbeispiel verwendeten GMSK-Modulation, werden die durch die Modulation bewußt eingeführten Verzerrungen durch den Kanalschätzer ausgeglichen. Bei nichtlinearen Modulationsverfahren muß vor der Zuführung des Trainingsdatensignals an die Anordnung zur Faltung von Datenfolgen 27 das Trainingsdatensignal genauso wie auf der Sendeseite zunächst moduliert werden. In diesem Fall ist es vorteilhaft, bereits das modulierte Signal im Empfänger zu speichern, um den Aufwand für die jeweilige Modulation zu sparen.

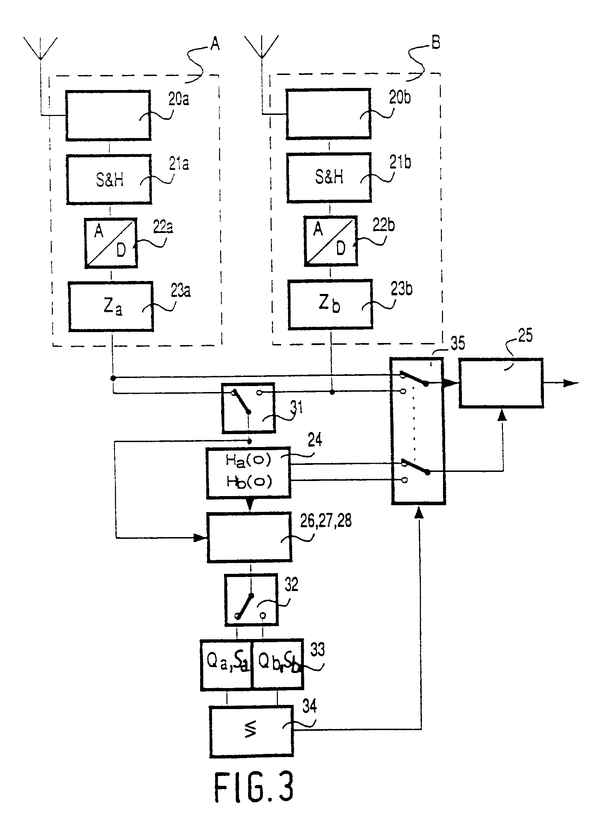

In einem in Fig. 3 dargestellten Ausführungsbeispiel wird die gewonnene Gütezahl Q in einem Diversity-Empfänger genutzt. Bei diesem Diversity-Empfänger sind zwei komplette Empfangskreise A und B aufgebaut, wobei ein Empfangskreis sich aus dem Empfangsteil 20, dem Sample- and Hold-Glied 21, dem A/D-Umsetzer 22 und dem RAM 23 jeweils zusammensetzt. Mittels einer nicht dargestellten Steuerschaltung werden dem einzigen Kanalschätzer 24 zunächst die im RAM 23a des ersten Empfangskreises zwischengespeicherten Abtastwerte zugeführt. Die daraus gebildete Kanalimpulsantwort $H_a(0)$ wird zwischengespeichert und zur Berechnung der Gütezahl $Q_a$ des ersten Empfangskreises A verwendet. Die berechnete Gütezahl $Q_a$ wird in einem ersten Bewertungszahlzwischenspeicher 33 zwischengespeichert. Dann wird auf gleiche Weise die Kanalimpulsantwort $H_b(0)$ und die Gütezahl $Q_b$ des zweiten Empfangskreises B berechnet. Symbolisch ist diese hintereinander erfolgende Berechnung durch Umschalter 31, 32 in Fig. 3 dargestellt. Durch einen Vergleicher 34 wird dann festgestellt, welche von den beiden Gütezahlen Qa, Qb die kleinere ist und über eine, symbolisch ebenfalls als Schalter dargestellte, Auswahlschaltung 35 die Kanalimpulsantwort H(0) und die Abtastwerte des als besser bewerteten Empfangskreises dem wiederum auch einzigen Entzerrer 25 zugeführt.

Im Gegensatz zu Schaltungsanordnungen von Diversity-Empfängern, welche aufgrund von analogen Signalbewertungskriterien umschalten, ist bei diesem Diversity-Empfänger gewährleistet, daß das Signal ausgewählt wird, welches sich auch am besten für die digitale Signalverarbeitung eignet, d.h. das Signal, das gegenüber dem anderen Signal eine bessere Rekonstruktion der ursprünglich gesendeten Datenfolge erwarten läßt. Von entscheidendem Vorteil ist hierbei, daß zur Auswahl des besseren der beiden Signale beide Signale nicht vollständig entzerrt werden müssen, wie dies beispielsweise der Fall wäre, wenn man für jeden Empfangskreis eine Bitfehlerrate aus dem komplett verarbeiteten Signal gewinnen würde.

Für die Berechnung der Gütezahl Q eignen sich wegen der digitalen Abtastwerte und den für die Berechnung der Bewertungszahl ausschließlich notwendigen arithmetischen Operationen mit den Abtastwerten und den bekannten Werten der Trainingsdatenfolge im besonderen Maße Signalprozessoren, wie sie auch für den Kanalschätzer 24 und die Entzerrung und Detektion der Datenbits üblich sind. Der Aufwand zur Berechnung der Bewertungszahl ist bezogen auf den Aufwand für den Kanalschätzer und die Entzerrung relativ gering, so daß die Berechnung der Gütezahl von dem selben Signalprozessor, der auch die Kanalschätzung und die Entzerrung vornimmt, durchgeführt werden kann.

Als Signalprozessor eignet sich beispielsweise der von der Firma AT&T unter der Typenbezeichnung DSP 16 A vertriebene Signalprozessor. Hardwaremäßiger Aufbau und Programmierung dieses Signalprozessors kann den entsprechenden Datenbildern und Applikationsvorschlägen zu diesem Signalprozessor entnommen werden.

Im Ausführungsbeispiel für einen digitalen Empfänger mit einem Signalprozessor werden die Funktionen des im ersten Ausführungsbeispiel beschriebenen Kanalschätzers 24, des Viterbi-Entzerrers 25, der Anordnung zu Faltung von Datenfolgen 27 und des Summierers 28 von dem Signalprozessor durchgeführt. Die von einem A/D-Umsetzer in binärer Darstellung gelieferten Abtastwerte werden in einem Teilbereich eines Schreib-Lese-Speichers (RAM) zwischengespeichert. Bei Verwendung des bereits beschriebenen Empfängerkonzeptes mit einem Quadraturmischer werden im RAM für jeden Abtastwert sowohl dessen I-Komponente als auch dessen Q-Komponente gespeichert. Als nächstes ermittelt der Signalprozessor in bekannter Weise durch Kreuzkorrelation der im RAM gespeicherten Abtastwerte Z mit der im ROM gespeicherten Trainingsdatenfolge X die Kanalimpulsantwort H(0). Die ermittelte Kanalimpulsantwort H(0) wird in einem anderen Teil des RAM zwischengespeichert. Zur Berechnung des Bewertungskriteriums wird dann zunächst die Trainingssequenz X mit der soeben ermittelten Kanalimpulsantwort H(0) gefaltet. Die Faltung der beiden Datenfolgen erfolgt hierbei nach der unter der Gleichungsnummer (1) angegeben Berechnungsvorschrift. Die einzelnen Glieder der auf diese Weise erhaltenen Datenfolge werden wiederum in einem weiteren Teilbereich des RAM zwischengespeichert. Anschließend werden nach der unter der Gleichungsnummer (2) vorstehend angegebenen Berechnungsvorschrift die jeweils zuordenbaren Glieder der geschätzten Trainingsdatenfolge Y von den Gliedern der empfangenen Trainingsdatenfolge X' subtrahiert, quadriert und zur Bewertungszahl S aufsummiert. Nach Gleichungsnummer (3) wird dann der Energieinhalt der empfangenen Trainingsdatenfolge X' ermittelt und durch die Bewertungszahl S dividiert. Nachdem der Signalprozessor auf vorstehend beschriebene Weise die Gütezahl Q berechnet hat, fährt er in bekannter Weise mit der weiteren digitalen Signalbearbeitung der empfangenen Daten fort.

In einem Empfänger mit Diversity-Empfang bestimmt der Signalprozessor jeweils für jeden Empfangszweig A bzw. B das jeweils zugehörige Bewertungskriterium $Q_A$ bzw. $Q_B$. Da zur Berechnung des Bewertungskriteriums Q jeweils die gleiche Berechnung durchgeführt wird und nur die Eingangsdaten, nämlich die Abtastwerte des Empfangszweiges A bzw. des Empfangszweiges B sich voneinander unterscheiden, ist es vorteilhaft, die Berechnung des Bewertungskriteriums als Unterprogramm auszuführen und die Abtastwerte des Empfangszweiges A bzw. des Empfangszweiges B als Parameter zu übergeben. Die jeweils ermittelten Gütezahlen $Q_a$ bzw. $Q_b$ werden nach der Berechnung jeweils in einem Schreib-Lese-Speicher zwischengespeichert, um sie anschließend miteinander zu vergleichen. Je nachdem, welche der beiden Gütezahlen größer ist, werden für die weitere an sich bekannte digitale Signalverarbeitung durch den Signalprozessor die Abtastwerte Za des Empfangszweiges A bzw. die Abtastwerte Zb des Empfangszweiges B ausgewählt und als Variablen übergeben.

Im besonderen Maße eignet sich die aus der empfangenen Trainingsdatenfolge X' und der geschätzten Trainingsdatenfolge Y gebildete Bewertungszahl S zur Verwendung in Signalentzerrungsverfahren, bei denen die einzelnen entzerrten Datenelemente einer Datenfolge eine Zuverlässigkeitsinformation $L(b'_i)$ für jedes detektierte Datensymbol $b'_i$ zugewiesen bekommen. Diese Zuverlässigkeitsinformation $L(b'_i)$ ist ein Maß für die Wahrscheinlichkeit, mit der der Entzerrer sich für das jeweilige Datensymbol $(b'_i)$ entschieden hat. Durch Bildung einer Verhältniszahl aus dieser Zuverlässigkeitsinformation $L(b'_i)$ und der jeweiligen Bewertungszahl S eines Zeitschlitzes wird die Entscheidung des Entzerrers zusätzlich mit der Empfangsgüte des empfangenen Signals bewertet (siehe beispielsweise deutsche Patentanmeldung mit dem Aktenzeichen 39 11 999.8). Dies ist besonders dann von Vorteil, wenn wie beim eingangs genannten künftigen pan-europäischen Mobilfunksystem, Datenblöcke durch Kanalcodierung geschützt und auf verschiedene Zeitschlitze verteilt werden (interleaving). Durch diese Übertragungsredundanz kann dann das jeweilig wahrscheinlichere Datensymbol ausgewählt werden. Durch die Normierung der Zuverlässigkeitsinformationen $L(b'_i)$ auf S wird die Sicherheit der Kanaldecodierung bei sogenannter soft-decision Decodierung beträchtlich gesteigert.

Es versteht sich von selbst, daß die beschriebene Gewinnung der Gütezahl nicht nur auf digitale Funkübertragungssysteme beschränkt ist. Auch bei leitungsgebundener Datenübertragung, beispielsweise über Glasfasern oder Koaxialkabel, treten Signalverzerrungen auf, die zu Eingangssignalen unterschiedlicher Empfangsgüte führen. Auch bei diesen Übertragungssystemen läßt sich auf die beschriebene Art und Weise eine die Empfangsgüte kennzeichnende Bewertungszahl bzw. Gütezahl finden.

**Patentansprüche**

1. Empfänger (2) mit einem Kanalschätzer (24) zum Schätzen einer Kanalimpulsantwort (H(0)) für den Übertragungskanal aus einer im Empfänger (2) gespeicherten Trainingsdatenfolge (X) und einer in übertragenen Daten enthaltenen Trainingsdatenfolge (X'),
   <u>dadurch gekennzeichnet,</u>
   daß der Empfänger (2) Mittel (27) zur Ermittlung einer Schätzfolge (Y) für die empfangene Trainingsdatenfolge (X') aus der im Empfänger (2) gespeicherten Trainingsdatenfolge (X) mittels der geschätzten Kanalimpulsantwort (H(0)) und Mittel (28) zur Ermittlung des Grads der Übereinstimmung der geschätzten Trainingsdatenfolge (Y) mit der empfangenen Trainingsdatenfolge (X') aufweist.

2. Empfänger nach Anspruch 1,
   <u>dadurch gekennzeichnet,</u>
   daß die Mittel (27) zur Ermittlung einer Schätzfolge (Y) eine Anordung (27) zur Faltung von Datenfolgen aufweist, die zur Faltung der gespeicherten Trainingsdatenfolge (X), gegebenenfalls nach Modulation im Empfänger (2), mit der geschätzten Kanalimpulsantwort (H(0)) vorgesehen sind.

3. Empfänger nach einem der Ansprüche 1 oder 2,
   <u>dadurch gekennzeichnet,</u>
   daß die Mittel (28) zur Ermittlung des Grads der Übereinstimmung der geschätzten Trainingsdatenfolge (Y) mit der empfangenen Trainingsdatenfolge (X') zur Bildung einer Bewertungszahl (S) und/oder einer Gütezahl (Q) vorgesehen sind, die die Empfangsgüte beschreibt.

4. Empfänger nach einem der Ansprüche 1 bis 3,
   <u>dadurch gekennzeichnet,</u>
   daß die Mittel (28) zur Ermittlung des Grads der Übereinstimmung der geschätzten Trainingsdatenfolge (Y) mit der empfangenen Trainingsdatenfolge (X') zur Bildung der Bewertungszahl (S) aus der Summe der quadratischen Distanzen zwischen sich jeweils entsprechenden Gliedern der geschätzten Trainingsdatenfolge (Y) und der empfangenen Trainingsdatenfolge (X') vorgesehen sind.

5. Empfänger nach Anspruch 4,
   <u>dadurch gekennzeichnet,</u>
   daß zur Bildung der quadratischen Distanzen eine Anzahl von Gliedern ($x_k...x_{m-2}$) aus der Mitte der geschätzten und der empfangenen Trainingsdatenfolge (Y, X') vorgesehen ist.

6. Empfänger nach einem der Ansprüche 3, 4 oder 5,
   <u>dadurch gekennzeichnet,</u>
   daß zur Wichtung der Bewertungszahl (S) der Energieinhalt der empfangenen Trainingsdatenfolge (X') vorgesehen ist.

7. Empfänger nach einem der Ansprüche 1 bis 6,
   <u>dadurch gekennzeichnet,</u>
   daß der Empfänger (2) mindestens zwei Empfangskreise (A, B) aufweist, wobei Mittel (26, 27, 28) zur Berechnung jeweils eines die Empfangsgüte für jeden Empfangskreis (A, B) kennzeichnenden Bewertungskriteriums (Bewertungszahlen $S_a$, $S_b$ bzw. Gütezahlen $Q_a$, $Q_b$) vorgesehen sind.

8. Empfänger nach einem der Ansprüche 1 bis 7,
   <u>dadurch gekennzeichnet,</u>
   daß der Empfänger (2) Mittel (34, 35) zur Auswahl von Abtastwerten ($Z_a$, $Z_b$) eines der Empfangskreise (A, B) zur weiteren Signalverarbeitung in Abhängigkeit der Bewertungskriterien (Bewertungszahl $S_a$, $S_b$ bzw. Gütezahlen $Q_a$, $Q_b$) aufweist.

**9.** Empfänger nach einem der Ansprüche 1 bis 8,
dadurch gekennzeichnet,
daß der Empfänger (2) Mittel zur Wichtung von zu jeweils detektierten Datensymbolen (b') gebildeten Zuverlässigkeitsinformationen mit der Bewertungszahl (S) bzw. der Gütezahl (Q) aufweist.

**10.** Empfänger nach einem der Ansprüche 1 bis 9,
dadurch gekennzeichnet,
daß zur Ermittlung der Bewertungszahl (S) bzw. der Gütezahl (Q) ein programmgesteuerter Prozessor vorgesehen ist.

**11.** Empfänger nach Anspruch 10,
dadurch gekennzeichnet,
daß der Prozessor ein Signalprozessor ist, der auch zur Ermittlung der Kanalimpulsantwort (H(0)) und zur Durchführung der Entzerrung/Detektion von, dem Empfangssignal zuordenbaren, Abtastwerten (Z) vorgesehen ist.

**12.** Mobilstation mit einem Empfänger (2) nach einem der Ansprüche 1 bis 11.

**13.** Feststation mit einem Empfänger (2) nach einem der Ansprüche 1 bis 11.

**14.** Digitales Übertragungssystem mit mindestens einer Feststation und/oder mindestens einer Mobilstation mit einem Empfänger (2) nach einem der Ansprüche 1 bis 11.

**15.** Mobilfunksystem mit mindestens einer Feststation und/oder mindestens einer Mobilstation mit einem Empfänger (2) nach einem der Ansprüche 1 bis 11.

**Claims**

**1.** Receiver (2) with a channel estimator (24) for estimating a channel impulse response (H(0)) for the transmission channel from a training data sequence (X) stored in the receiver (2) and a training data sequence (X') contained in transmitted data, characterized in that the receiver (2) comprises means (27) for determining an estimated sequence (Y) for the received training data sequence (X') from the training data sequence (X) stored in the receiver (2) based on the estimated channel impulse response (H(0)) and means (28) for determining the degree of match of the estimated training data sequence (Y) with the received training data sequence (X').

**2.** Receiver as claimed in Claim 1, characterized in that the means (27) for determining an estimated sequence (Y) are an arrangement (27) for folding data sequences, which folds the stored training data sequence (X), after modulation in the receiver (2), if need be, with the estimated channel impulse response (H(0)).

**3.** Receiver as claimed in one of the Claims 1 or 2, characterized in that the means (28) for determining the degree of match of the estimated training data sequence (Y) with the received training data sequence (X') forms an estimate (S) and/or a quality factor (Q) which describes the receiving quality.

**4.** Receiver as claimed in one of the Claims 1 to 3, characterized in that the means (28) for determining the degree of match of the estimated training data sequence (Y) with the received training data sequence (X') forms the estimate (S) from the sum of the squared distances between matching elements of the estimated training data sequence (Y) and the received training data sequence (X').

**5.** Receiver as claimed in Claim 4, characterized in that for the formation of the squared distances a number of elements $(x_k \dots x_{m-2})$ is taken from the middle of the estimated and received training data sequences (Y, X').

**6.** Receiver as claimed in one of the Claims 3, 4 or 5, characterized in that the estimate (S) is weighted in accordance with the energy contents of the received training data sequence (X').

**7.** Receiver as claimed in one of the Claims 1 to 6, characterized in that the receiver (2) comprises at least two receiving loops (A, B), in which for each receiving loop (A, B) an estimation criterion (estimate $S_a$, $S_b$; quality factor $Q_a$, $Q_b$, respectively) characteristic of the receiving quality is calculated by means (26, 27, 28).

8. Receiver as claimed in one of the Claims 1 to 7, characterized in that in the receiver (2) comprises means (34, 35) for selecting sample values ($Z_a$, $Z_b$) of a receiving loop (A, B) for further signal processing in dependence on the estimation criteria (estimate $S_a$, $S_b$); quality factor $Q_a$, $Q_b$, respectively).

9. Receiver as claimed in one of the Claims 1 to 8, characterized in that the receiver (2) comprises means for weighting detected data symbols (b') formed into reliability information with the estimate (S) or quality factor (Q), respectively.

10. Receiver as claimed in one of the Claims 1 to 9, characterized in that a program-controlled processor determines the estimate (S) or quality factor (Q), respectively.

11. Receiver as claimed in Claim 10, characterized in that the processor is a signal processor which also determines the channel impulse response (H(0)) and carries out the equalization/detection of sample values (Z) that can be assigned to the received signal.

12. Mobile station comprising a receiver (2) as claimed in one of the Claims 1 to 11.

13. Base radio station comprising a receiver (2) as claimed in one of the Claims 1 to 11.

14. Digital communication system comprising at least one base radio station and/or at least one mobile station with a receiver (2) as claimed in one of the Claims 1 to 11.

15. Mobile radio system comprising at least one base radio station and/or at least one mobile station with a receiver (2) as claimed in one of the Claims 1 to 11.

**Revendications**

1. Récepteur (2) comprenant un estimateur de canal (24) pour l'estimation d'une réponse impulsionnelle de canal (H(0) pour le canal de transmission à partir d'une séquence de données d'apprentissage (X) stockées dans le récepteur (2) et d'une séquence de données d'apprentissage (X') contenues dans des données transmises, caractérisé en ce que le récepteur (2) comporte des moyens (27) pour déterminer une séquence d'estimation (Y) pour la séquence de données d'apprentissage (X') reçues à partir de la séquence de données d'apprentissage (X)stockées dans le récepteur (2) à l'aide de la réponse impulsionnelle de canal estimée (H(0) ainsi que des moyens (28) pour déterminer le degré de correspondance entre la séquence de données d'apprentissage (Y) estimées et la séquence de données d'apprentissage (X') reçues.

2. Récepteur suivant la revendication 1, caractérisé en ce que les moyens (27) pour déterminer une séquence d'estimation (Y) comportant un dispositif (27) pour convoluer des séquences de données qui sont prévues pour convoluer la séquence de données d'apprentissage (X) éventuellement après modulation dans le récepteur (2), avec la réponse impulsionnelle de canal estimée (H(0)).

3. Récepteur suivant l'une ou l'autre des revendications 1 ou 2, caractérisé en ce que les moyens (28) pour déterminer le degré de correspondance de la séquence de données d'apprentissage estimées (Y) et de la séquence de données d'apprentissage reçues (X') sont prévus pour former un facteur d'évaluation (S) et/ou un facteur de qualité (Q) qui décrit la qualité de réception.

4. Récepteur suivant l'une quelconque des revendications 1 à 3, caractérisé en ce que les moyens (28) pour déterminer le degré de correspondance de la séquence de données d'apprentissage estimées (Y) et de la séquence de données d'apprentissage reçues (X') sont prévues pour former le facteur d'évaluation (S) à partir de la somme des carrés des distances séparant des éléments chaque fois correspondants de la séquence de données d'apprentissage estimées (Y) et de la séquence de données d'apprentissage reçues (X').

5. Récepteur suivant la revendication 4, caractérisé en ce que, pour la formation des carrés des distances, est prévu un certain nombre d'éléments ($X_k$, ..., $x_{m-2}$) provenant du milieu des séquences de données d'apprentissage estimées et reçues (Y, X').

6. Récepteur suivant l'une quelconque des revendications 3, 4 ou 5, caractérisé en ce que pour pondérer le facteur d'évaluation (S) est prévu le contenu énergétique de la séquence de données d'apprentissage reçues (X').

**7.** Récepteur suivant l'une quelconque des revendications 1 à 6, caractérisé en ce que le récepteur (2) comporte au moins deux circuits de réception (A, B), des moyens (26, 27, 28) étant prévus pour calculer chaque fois un critère d'évaluation (facteur d'évaluation $S_a$, $S_b$ ou facteur de qualité $Q_a$, $Q_b$) caractérisant la qualité de réception pour chaque circuit de réception (A, B).

**8.** Récepteur suivant l'une quelconque des revendication 1 à 7, caractérisé en ce que le récepteur (2) comporte des moyens (34, 35) pour sélectionner des valeurs d'échantillonnage ($Z_a$, $Z_b$) de l'un des circuits de réception (A, B) pour la poursuite du traitement de signaux en fonction des critères d'évaluation (facteurs d'évaluation $S_a$, $S_b$ ou facteurs de qualité $Q_a$, $Q_b$).

**9.** Récepteur suivant l'une quelconque des revendications 1 à 8, caractérisé en ce que le récepteur (2) comporte des moyens pour pondérer des informations de fiabilité formées chaque fois pour les symboles de données détectés (b') par le facteur d'évaluation (S) ou le facteur de qualité (Q).

**10.** Récepteur suivant l'une quelconque des revendications 1 à 9, caractérisé en ce que pour déterminer le facteur d'évaluation (S) ou le facteur de qualité (Q), est prévu un processeur commandé par programme.

**11.** Récepteur suivant la revendication 10, caractérisé en ce que le processeur est un processeur de signaux qui est également prévu pour déterminer la réponse impulsionnelle de canal (H(0)) et pour effectuer la correction de distorsion/détection de valeurs d'échantillonnage (Z) pouvant être associées au signal de réception.

**12.** Poste mobile comportant un récepteur (2) suivant l'une quelconque des revendications 1 à 11.

**13.** Poste fixe comportant un récepteur (2) suivant l'une quelconque des revendications 1 à 11.

**14.** Système de transmission numérique comprenant au moins un poste fixe et/ou au moins un poste mobile comportant un récepteur (2) suivant l'une quelconque des revendications 1 à 11.

**15.** Système de radiotéléphonie mobile comprenant au moins un poste fixe et/ou au moins un poste mobile comportant un récepteur (2) suivant l'une quelconque des revendications 1 à 11.

FIG.1

FIG.2

FIG.3

FIG.4